# EUROPEAN PATENT APPLICATION

(11) **EP 0 892 345 A2**
(43) Date of publication of application: **20.01.1999**
(21) Application number: 98303265.7
(22) Date of filing: 27.04.1998
(51) Int. Cl.: G06F 9/46

(54) **Method of propagating a command status code from a remote unit to a host unit**

(30) Priority: 15.07.1997 US 892782
(71) Applicant: International Business Machines Corporation, Armonk, N.Y. 10504 (US)
(72) Inventor: Russell, Richard Charles, Red Hook, NY 12571 (US)
(74) Representative: Burrington, Alan Graham Headford

(57) **Abstract**

Propagation of a command status code from a remote unit to a host unit. A command to be executed on a remote unit is passed from a host unit to the remote unit, using a remote command execution facility, such as the remote shell (RSH) facility of UNIX. The command is executed on the remote unit and the status code of the command is forwarded from the remote unit to the host unit, using the remote command execution facility. In one example, the status code is appended to standard output, so that it can be retrieved and used in further processing.

## Description

This invention relates, in general, to the remote execution of commands and, in particular, to the receipt at a host unit of the status of a command executed on a remote unit.

This application contains subject matter which is related to the subject matter of the following applications, which are assigned to the same assignee as'this application and filed on the same day as this application. The below listed applications are hereby incorporated herein by reference in their entirety:
"System Of Propagating A Command Status Code From A Remote Unit To A Host Unit," by Richard C. Russell, Serial No. 08/892,807, (Docket No. PO9-97-082); and
"Propagation Of A Command Status Code From A Remote Unit To A Host Unit," by Richard C. Russell, Serial No. 08/892,779, (Docket No. PO9-97-O83).

Within many computer environments, multiple processors are connected to one another using typical telecommunications connections, such as TCP/IP or token rings.

In these environments, there is often a need or desire to execute a command on one processor, when logged onto another processor. That is, there is a need or desire to execute the command remotely.

In, for instance, UNIX-based operating systems. a command can be executed remotely using a remote shell (RSH) facility.

Often, the remote shell facility is invoked from within a shell script that includes one or more statements. When the shell script is run, each statement is executed one at a time.

When the shell script invokes the RSH facility, the RSH facility causes a specified command to be executed at a specified network-connected remote processor. That is, the specified command is run on the remote processor via RSH and the results of the specified command are returned back to the host processor (i.e., the processor issuing the request). The results include "standard output", which is the output of the specified command, and "standard error", which includes any error messages that were generated by the command. However, neither "standard output" nor "standard error" includes the status code (e.g., the return code or the exit code) of the executed specified command.

In particular, when the specified command is executed remotely, it generates a status code. However, RSH is incapable of returning the status code to the host processor. Instead. the status code of the specified command is lost and/or disregarded. and what is returned is the status condition of the RSH facility.

Since the status code of the specified command is not returned to the host processor, further processing to take place after execution of the specified command (e.g., processing within the script) is tenuous, at best. This is due to the uncertainty of whether the specified command executed successfully or not.

Based on the Foregoing, a need exists for a capability that enables the return of the status code of a remotely executed command, when the command is executed using a facility, such as RSH.

The shortcomings of the prior art are overcome and additional advantages are provided through the provision of a method of propagating a status code from a remote unit to a host unit.

A command to be executed on a remote unit is passed from a host unit to the remote unit, using a remote command execution facility. The command is executed on the remote unit, and a status code of the command is forwarded from the remote unit to the host unit. The status code is forwarded using the remote command execution facility.

In one embodiment. the passing of the command from the host unit to the remote unit includes issuing a remote command execution facility invocation to execute the command on the remote unit. The remote command execution facility invocation identifies the command.

In a further embodiment, the remote command execution facility invocation is issued from within a subroutine, and the subroutine is called from within a shell script or a computer program.

In yet a further embodiment, another command, which is identified on the remote command execution facility invocation, is run on the remote unit, and the execution of the first command is under control of the another command.

In another embodiment of the present invention, the forwarding of the status code from the remote unit to the host unit includes adding the status code to standard output generated during execution of the command, and passing the standard output to the host unit.

In a further example of the present invention, a method of propagating a status code from a remote unit to a host unit is provided. The method includes invoking from within a subroutine on a host unit a remote command execution facility to execute a first command; executing the first command on a remote unit: executing a second command on the remote unit via the first command; and forwarding a status code of the second command from the first command on the remote unit to the host unit.

The capabilities of the present invention advantageously allow the return of a status code of a remotely executed command, via a remote command execution facility, such as RSH. The capabilities of the present invention are easily adaptable to the scripting environments and do not require the changing of operating system code. The capabilities of the present invention enable the return of the status code, even if no other output is generated or is being returned to the host unit.

Additional features and advantages are realised through the techniques of the present invention. Other embodiments and aspects of the invention are described in detail herein and are considered a part of the claimed invention.

The subject matter which is regarded as the invention is particularly pointed out and distinctly claimed in the claims at the conclusion of the specification. The foregoing and other objects, features, and advantages of the invention will be apparent from the following detailed description taken in conjunction with the accompanying drawings in which:
FIG. 1 depicts one example of a computer environment incorporating and using the status code propagation capability of the present invention;
FIG. 2 depicts one embodiment of further details within the computer environment of FIG. 1 incorporating and using the status code propagation capability of the present invention; and
FIG. 3 depicts one example of the logic associated with the status code propagation capability of the present invention.

In accordance with the principles of the present invention. a capability is provided in which a status code of a remotely executed command is returned to the host unit (e.g.. the unit requesting execution of the command) via a remote command execution facility. In particular, the remote command execution facility, which was previously unable to return the status code, is adapted to allow the propagation of the status code from a remote unit to the host unit.

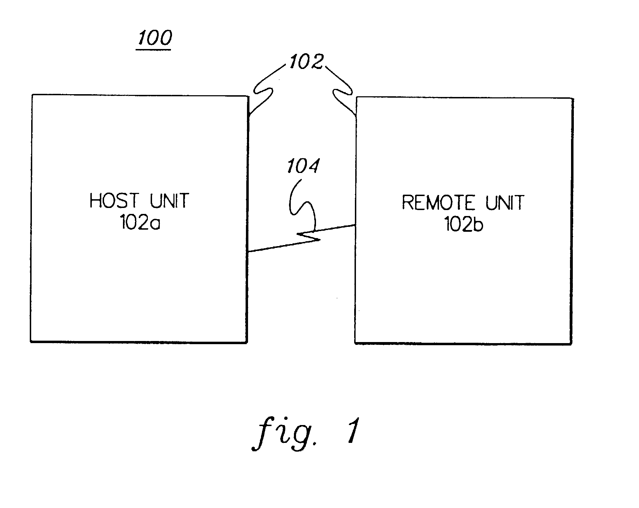

One example of a computer environment incorporating and using the status code propagation capability of the present invention is described in detail below with reference to FIG. 1.

Referring to FIG. 1, in one embodiment. a computer environment 100 includes a plurality of units 102 coupled to one another via a connection 104. In one example, each unit is a UNIX workstation running a UNIX-based operating system, and the units are coupled to one another via a TCP/IP connection.

Each unit includes, for instance, a central processing unit, memory and one or more input/output devices, which are well known in the art.

The above-described environment in which each unit is a UNIX workstation running a UNIX-based operating system is only one example, however. The status code propagation capability of the present invention can be incorporated and used with any type of computers, processors, systems, workstations and/or environments, without departing from the spirit of the present invention.

For instance, in another embodiment, one or more of the units is a PS/2 offered by International Business Machines Corporation. In a further embodiment, one or more of the units is based upon the Enterprise Systems Architecture offered by International Business Machines Corporation. Further, the operating system need not be UNIX-based. For example, the operating system can include the Multiple Virtual Storage (MVS) operating system offered by International Business Machines Corporation.

Additionally, connection 104 need not be TCP/IP. It can be any type of wire connection, token ring or network connection, to name just a few more examples.

In yet a further embodiment, the environment includes a large parallel system with a plurality of units (e.g., 512 nodes) coupled to one another via a network connection, such as a switch. Additionally, in other environments, the units can be of differing types connected to one another via one or more connections. The invention is not limited to a particular number of units coupled together nor the type of units that are coupled.

Again, other types of computers, processors, systems. workstations, and/or environments can include the status code propagation capability of the present invention, and all of these types are considered within the scope of the present invention.

In accordance with the principles of the present invention, at least one of units 102 is a host unit 102a, which is coupled to one or more remote units 102b. Commands invoked on a host unit (e.g., a local unit originating a request) are executed on one or more of the remote units.

For instance. if a particular management function is to be carried out on a number of remote units, a specified command representing the management function is invoked at the host unit and remotely executed on the remote units.

In one embodiment. the specified command is invoked via a remote command execution facility, the invocation of which is embedded within. for instance, a shell script (e.g.. written in PERL) or a computer program (e.g., written in C) located on the host unit.

One example of a remote command execution facility is the RSH facility of UNIX. RSH is described in UNIX Network Programming, by W. Richard Stevens, Prentice Hall, 1990, ISBN 0-13-949876-1, which is hereby incorporated herein by reference in its entirety.

The remote command execution facility transports the specified command from the host unit to the remote units to be executed on the remote units and forwards back to the host unit the "standard output" and "standard error" generated during execution of the specified command.

The "standard output" includes the output of the specified command, and the "standard error" includes a list of error messages issued by the command. However, neither "standard output" nor "standard error" includes the status code (e.g., an exit or return code) of the specified command. That is, neither "standard output" nor "standard error" provides an indication of whether the specified command terminated successfully. Thus, prior to the present invention. the remote command execution facility was characterised as being incapable of returning to the host unit the status code of the remotely executed specified command.

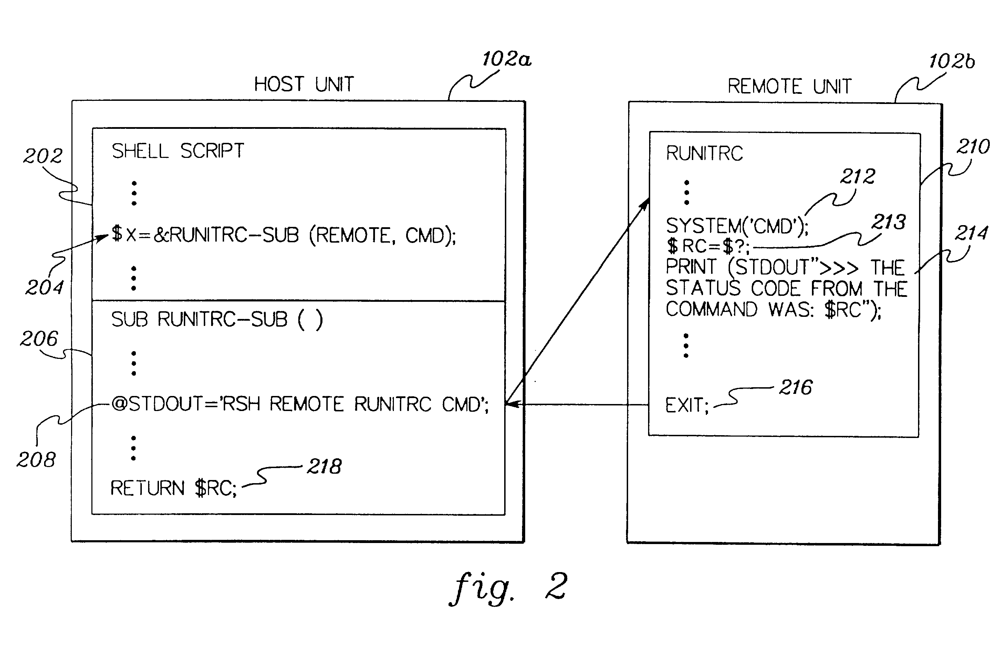

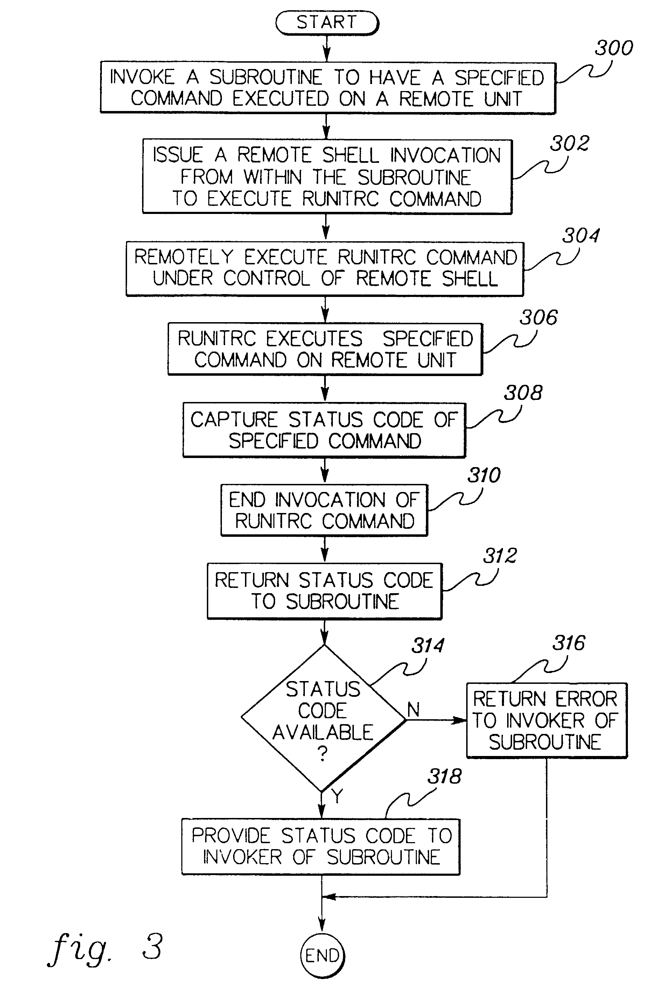

However, in accordance with the principles of the present invention, the remote command execution facility is capable of returning the status code from the remote unit(s) to the host unit, as described in detail below with reference to FIGs. 2 and 3.

Referring to FIG. 2, in one example, host unit 102a includes a shell script 202 written in a scripting language, such as PERL. Shell script 202 includes an invocation 204 of a subroutine 206. In particular, the subroutine invocation includes the following syntax, as one example:
$x=&runitrc-sub(remote,cmd);

Where:
$x is a variable to capture the status code, as described below;
& denotes the invocation of a subroutine:
runitrc-sub is the name of the subroutine;
remote identifies the remote unit in which a specified command is to be executed; and
cmd identifies the specified command to be executed on the remote unit, designated by remote.

The shell script can include additional statements (e.g., commands and/or operations) to be performed before and/or after the subroutine invocation, as designated in the figure by the ellipses.

Additionally. a plurality of subroutine invocations can be included in order to execute the specified command (or other specified commands) on a plurality of remote units.

The code for subroutine 206 (i.e.. the runitrc subroutine) is provided various information during the invocation. which include identification of the remote unit to execute the specified command and the specified command to be executed on the remote unit. The subroutine takes that information and issues a remote shell invocation 208 against the specified remote unit. This invocation, however, is an invocation of a runitrc command, as opposed to the specified command. One example of the syntax for runitrc command invocation 208 is the following:
@stdout='rsh remote runitrc cmd';

Where:
@stdout refers to a variable on the left hand side of an assignment (=), which is used, as described below, to capture the output of the remotely executed specified command; and
' ' on the right-hand side of the assignment indicates an inline invocation of a command. In this example, "rsh" indicates this is a remote command execution facility (e.g., RSH) command to be run on the unit designated by "remote".

The remote command execution facility command to be run is "runitrc cmd." That is, the remote command execution facility transports the string "runitrc cmd" to the remote unit and executes it on remote unit 102b. In particular, the command runitrc (designated by reference numeral 210) is run under the control of the remote command execution facility. The code for the runitrc command is located on the remote unit. The runitrc command takes the parameter it has been supplied (e.g., cmd) and executes it, when it reaches inline invocation 212 of cmd.

In one example, cmd is invoked using the following syntax:
system('cmd');.

The above is a system call that executes the specified command inline.

The output (e.g., standard output, standard error) of the specified command is merged with the output (e.g.. standard output, standard error) of the runitrc command.

As with the shell script, runitrc command 210 also includes one or more various other statements (e.g. commands and/or operations) before and/br after the invocation of the specified command. In one example, one of the additional statements is statement 213 "$rc=$?;", which is used as described below to capture the status code of the specified command. Another statement is a print statement 214. In this example, the print statement writes to the "standard output", designated by STDOUT, the status code of the specified command, in accordance with the principles of the present invention. This is described in further detail below.

Additionally, the runitrc command includes an exit statement 216, which terminates the invocation of the runitrc command. Thereafter, the remote command execution facility (e.g., RSH) returns "standard output" to subroutine 206, at reference numeral 208. Additionally, "standard error" is returned by the remote command execution facility and it is merged with "standard error" of the shell script.

After the output, error messages and status code are returned to the subroutine, one or more other statements may be executed inline. In one example, a return statement 218 is executed, which returns the status code to shell script 202. The shell script is then able to do further processing with the status code, in accordance with the principles of the present invention.

One example of a logic flow diagram of the functions included in the status code propagation capability of the present invention is depicted in FIG. 3 and described in detail below. For this discussion, reference is also made to FIG. 2. The reference numerals within the 200's can be found in FIG. 2.

Referring to FIG. 3, initially, a subroutine (e.g., the runitrc subroutine) is invoked in order to have a specified command (designated by cmd) executed on a remote unit, STEP 300. In one example, subroutine 206 is a library routine invoked from within shell script 202 using invocation 204. In another embodiment, however, the subroutine is invoked from within a computer program, such as a program written in C.

Thereafter, a remote command execution facility (e.g., RSH) invocation is issued from within the subroutine in order to execute a runitrc command on a remote unit, which in turn will remotely execute the specified command (cmd), STEP 302. In one instance. the remote command execution facility is invoked by invocation 208, as described above. In particular, the remote command execution facility (e.g., RSH) transports the string "runitrc cmd" to the remote unit designated by "remote".

The command, runitrc, is then run on the remote unit under the control of the remote command execution facility, STEP 304. Specifically, the statements within the runitrc command are executed inline, one at a time. At a particular point within the code for the runitrc command, an invocation is reached for the specified command to be executed on the remote unit. In one example, the specified command, designated by cmd, is invoked by invocation 212. It should be noted that cmd represents a string of one or more words that identify the specified command to be remotely executed.

The specified command is then executed, STEP 306. and the output of the specified command, if any, is captured in "standard output" and the error messages, if any, are captured in "standard error".

Additionally, in accordance with the principles of the present invention, the status code of the specified command is captured. STEP 308. In one example, the status code is captured using the following assignment:
$rc=$?:

Where:
$rc is the variable to contain the status code; and
$? is a variable that contains the stains code of the most recently executed command (i.e., the specified command, in this instance).

Thereafter, the status code (e.g., the value of $rc) is written to "standard output", using print statement 214 within the runitrc command code. One embodiment of the syntax of the print statement is as follows:
print(stdout ">>>The status code from the command was: $rc");.

In particular, the status code of the specified command is captured within the variable $rc and a special text string ">>>The status code from the command was:" is added to the already provided "standard output" text. That is, in one example, this special text line is added to the last line'of "standard output". If there is no output. then this special text line will be the only line within "standard output".

Thereafter, invocation of the runitrc command is terminated, when, for instance, exit statement 216 within the runitrc command is reached, STEP 310. After completion of the runitrc command, the status code is returned to the calling subroutine 206, the runitrc subroutine, via the remote command execution facility. In particular, the remote command execution facility forwards to the calling subroutine the "standard output", which now includes the status code of the specified command. Additionally, "standard error" is returned. The manner in which "standard output" and "standard error" are forwarded from a remote unit to a host unit is known to those skilled in the art.

"Standard output", including the status code line. is returned within the runitrc subroutine to the variable @stdout (reference numeral 208). Subsequently, other processing within the subroutine can take place. For instance, a determination is made as to whether the status code is available, STEP 314. In particular, the last line of "standard output" is stripped off and the subroutine code looks for the numeric value following the text string ">>> The status code from the command was:". If, for some reason, the status code is not returned. an error message is passed to the invoker of the subroutine (e.g., shell script 202). STEP 316. If, however, the status code is returned, the status code is provided to the invoker of the subroutine, STEP 318. In one example, the status code is returned to the shell script using the statement, return $rc (reference numeral 218).

The status code is returned to the shell script into the variable $x in invocation 204. At this time, the code of the shell script can take further action.

For instance, conditional logic can be included in order to perform further tasks depending on the value of the status code.

In the above example, the status code is added to the last line of "standard output". This is only one example, however. In another embodiment, the status code can be added to other places within "standard output". In yet a further embodiment, the status code can be returned with "standard error".

In one example of the present invention, the status code is returned in the "standard output", even if the coder of the remote specified command indicates that no output is to be generated.

In accordance with the principles of the present invention, the remote command execution facility is provided with the ability to return a status code of a remotely executed command from a remote unit to a host unit. This advantageously allows the calling script or program to perform certain other tasks, which depend on the proper return of the status code.

The present invention provides an easy mechanism for interactive shell scripting environments executing remote command execution facilities to receive accurate status codes from remotely executed commands. With the present invention, the operating system code (e.g., the UNIX operating system code) need not be changed.

In accordance with the principles of the present invention, the command can be sent from a host unit to a plurality of remote units. Each of the remote units would include the runitrc command code, in this example. A status code would then be returned from each of the remote units. In a further embodiment, multiple host units can be used to send commands to one or more remote units.

The present invention can be included in an article of manufacture (e.g.. one or more computer program products) having, for instance, computer useable media. The media has embodied therein, for instance, computer readable program code means for providing and facilitating the capabilities of the present invention. The article of manufacture can be included as a part of a computer system or sold separately.

The flow diagrams depicted herein are just exemplary. There may be many variations to these diagrams or the steps (or operations) described therein without departing from the spirit of the invention. For instance, the steps may be performed in a differing order, or steps may be added. deleted or modified. All of these variations are considered a part of the cl.aimed invention.

The present invention also relates to a method of propagating a status code from a remote unit to a host unit, said method comprising:
invoking from within a subroutine on a host unit a remote command execution facility to execute a first command;
executing said first command on a remote unit;
executing a second command on said remote unit via said first command; and
forwarding a status code of said second command from said first command on the remote unit to said host unit.

The method of the previous paragraph further comprises either a) invoking said subroutine from within either a shell script or a computer program or b) adding said status code to standard output generated for said second command. said adding being performed during execution of said first command;
exiting said first command; and
passing said standard output from said remote unit to said host unit using said remote command execution facility.

Although preferred embodiments have been depicted and described in detail herein, it will be apparent to those skilled in the relevant art that various modifications, additions, substitutions and the like can be made without departing from the invention as defined in the following claims.

## Claims

1. A method of propagating a status code from a remote unit (102b) to a host unit (102a), said method comprising:
passing from a host unit to a remote unit a command (300) to be executed on said remote unit, said passing using a remote command execution facility (302);
executing said command on said remote unit (304); and
forwarding a status code (318) of said command from said remote unit to said host unit, said forwarding using said remote command execution facility.

2. The method of claim 1, wherein said remote command execution facility being incapable of returning said status code from said remote unit is enabled to return said status code.

3. The method of claim 1, wherein said passing further comprises issuing a remote command execution facility invocation to execute said command on said remote unit. said remote command execution facility invocation identifying said command.

4. The method of claim 3, wherein said remote command execution facility invocation is issued from within a subroutine. said subroutine (302) being called from within either of a shell script or a computer program.

5. The method of claim 3, further comprising running another command on said remote unit. said another command (306) being identified on said remote command execution facility invocation, and wherein execution of said command is under control of said another command.

6. The method of claim 5, wherein said forwarding comprises passing said status code of said command from said another command to said host unit using capabilities of said remote command execution facility.

7. The method of claim 1, wherein said forwarding comprises:
including said status code in standard output generated during execution of said command; and
passing said standard output to said host unit.

8. The method of claim 7, further comprising removing said status code from said standard output.
